(19) **Europäisches Patentamt European Patent Office Office européen des brevets**

(11) **EP 1 586 421 B1**

(12) **EUROPEAN PATENT SPECIFICATION**

(45) Date of publication and mention of the grant of the patent:
**05.03.2008 Bulletin 2008/10**

(51) Int Cl.:
**B25J 9/16** *(2006.01)* **G05B 19/401** *(2006.01)*

(21) Application number: **04012357.2**

(22) Date of filing: **25.05.2004**

(54) **Self-calibrating orienting system for a manipulating device**

Selbstkalibrierendes Orientierungssystem für ein Handhabungsgerät

Système d'orientation auto-calibrant, pour un dispositif manipulateur

(84) Designated Contracting States:
**DE FR GB**

(30) Priority: **16.04.2004 EP 04009122**

(43) Date of publication of application:
**19.10.2005 Bulletin 2005/42**

(73) Proprietor: **Honda Research Institute Europe GmbH**
**63073 Offenbach/Main (DE)**

(72) Inventors:
• **Rodemann, Tobias,**
**c/oHonda Research**
**63073 Offenbach/Main (DE)**
• **Joublin, Frank,**
**c/oHonda Research**
**63073 Offenbach/Main (DE)**

(74) Representative: **Rupp, Christian et al**
**Mitscherlich & Partner**
**Patent- und Rechtsanwälte**
**Sonnenstrasse 33**
**80331 München (DE)**

(56) References cited:
• **BUESSLER J-L ET AL: "Visually guided movements: learning with modular neural maps in robotics" NEURAL NETWORKS, ELSEVIER SCIENCE PUBLISHERS, BARKING, GB, vol. 11, no. 7-8, 11 October 1998 (1998-10-11), pages 1395-1415, XP004146728 ISSN: 0893-6080**
• **KUHN D ET AL: "Cooperation of neural networks applied to a robotic hand-eye coordination task" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, vol. 4, 22 October 1995 (1995-10-22), pages 3694-3699, XP010194872 ISBN: 0-7803-2559-1**
• **KARA R ET AL: "Robot vision tracking with a hierarchical CMAC controller" KNOWLEDGE-BASED INTELLIGENT ENGINEERING SYSTEMS AND ALLIED TECHNOLOGIES, 2000. PROCEEDINGS. FOURTH INTERNATIONAL CONFERENCE ON BRIGHTON, UK 30 AUG.-1 SEPT. 2000, PISCATAWAY, NJ, USA,IEEE, US, vol. 1, 30 August 2000 (2000-08-30), pages 271-274, XP010523109 ISBN: 0-7803-6400-7**
• **PEDRENO-MOLINA J L ET AL: "Trajectories adaptive prediction based on image processing cerebellar model for ocular-motor systems in robotic heads" 2001 IEEE INTERNATIONAL CONFERENCE ON SYSTEMS MAN AND CYBERNETICS. SMC 2001. TUCSON, AZ, OCT. 7 - 10, 2001, IEEE INTERNATIONAL CONFERENCE ON SYSTEMS, MAN AND CYBERNETICS, NEW YORK, NY : IEEE, US, vol. VOL. 1 OF 5, 7 October 2001 (2001-10-07), pages 3008-3012, XP010568891 ISBN: 0-7803-7087-2**

**EP 1 586 421 B1**

**(Cont. next page)**

- PEDRENO J L ET AL INSTITUTE OF ELECTRICAL AND ELECTRONICS ENGINEERS: "Neural coordination model for perception systems in anthropomorphic robotic" IEEE 2002 INTERNATIONAL CONFERENCE ON SYSTEMS, MAN AND CYBERNETICS. (SMC'02). YASMINE HAMMAMET, TUNESIA, OCT. 6 - 9, 2002, IEEE INTERNATIONAL CONFERENCE ON SYSTEMS, MAN, AND CYBERNETICS, NEW YORK, NY : IEEE, US, vol. VOL. 7 OF 7, 6 October 2002 (2002-10-06), pages 165-169, XP010623592 ISBN: 0-7803-7437-1
- MILLER III W T ET AL: "CMAC: AN ASSOCIATIVE NEURAL NETWORK ALTERNATIVE TO BACKPROPAGATION" PROCEEDINGS OF THE IEEE, IEEE. NEW YORK, US, vol. 78, no. 10, 1 October 1990 (1990-10-01), pages 1561-1567, XP000171188 ISSN: 0018-9219
- W T MILLER, GLANZ F H: "UNH_CMAC Version 2.1" INTERNET ARTICLE, [Online] 1 March 2003 (2003-03-01), XP002321530 Retrieved from the Internet: URL:http: //www.intellektik.informatik.tu-d armstadt.de/ ~klausvpp/GAILS/CMAC/CMAC-Impl ementation.pdf> [retrieved on 2005-03-09]
- WIDROW B ET AL: "30 YEARS OF ADAPTIVE NEURAL NETWORKS: PERCEPTRON, MADALINE, AND BACKPROPAGATION" PROCEEDINGS OF THE IEEE, IEEE. NEW YORK, US, vol. 78, no. 9, 1 September 1990 (1990-09-01), pages 1415-1441, XP000165405 ISSN: 0018-9219
- DEAN P ET AL: "SACCADE CONTROL IN A SIMULATED ROBOT CAMERA-HEAD SYSTEM: NEURAL NET ARCHITECTURES FOR EFFICIENT LEARNING OF INVERSE KINEMATICS" 1 November 1991 (1991-11-01), BIOLOGICAL CYBERNETICS, SPRINGER VERLAG, HEIDELBERG, DE, PAGE(S) 27-36 , XP000262387 ISSN: 0340-1200 * the whole document *

**Description**

The present invention relates to the control of an orienting/positioning device having sensor means, the input space of which can be changed by a defined planned real-world action carried out by a manipulator controlled by the orienting/positioning device. Thereby it is envisaged to orient/position a manipulating device detected by the sensor means, i.e. covered by the input space of the sensor means, to a predefined target position of the input space coordinate system of the sensor means.

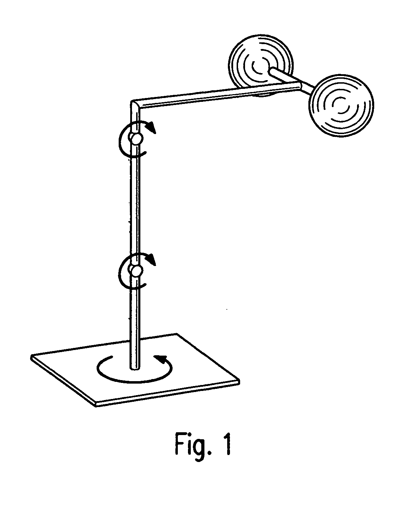

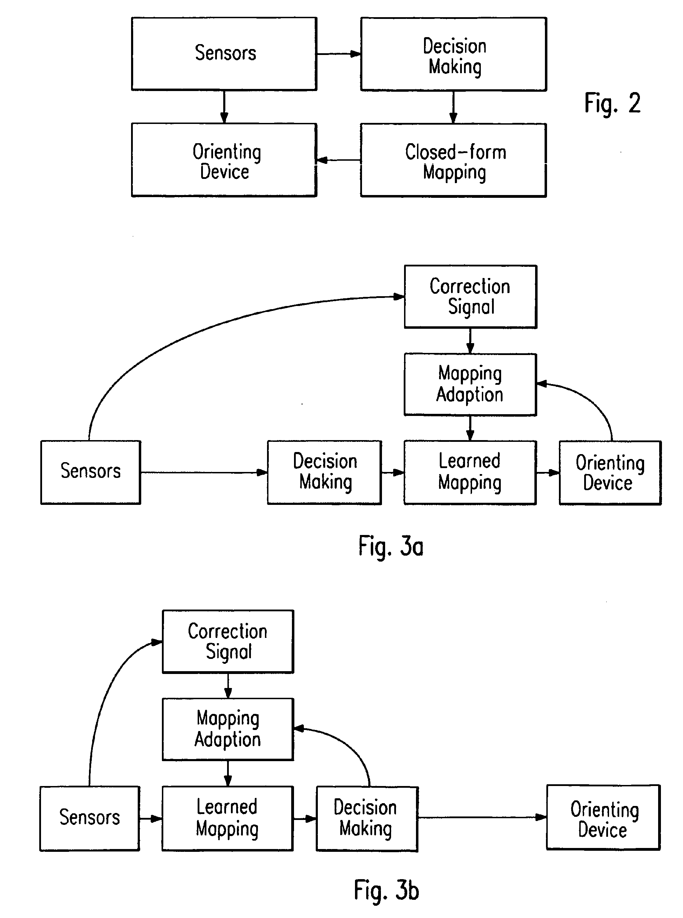

The background of the present invention is the field of orienting/positioning devices which shall now be explained with reference to figures 1 and 2. Figure 1 thereby shows a stereo camera which can be the directed in several degrees-of-freedom. It is now assumed that the shown camera is to be directed such that a detected visual target present somewhere in the input space of the camera moves into the origin of the input space. Figure 2 shows a known process to calculate and carry out an action (i.e. movement of the camera) in order to achieve said object. In a first step the output of the sensor (here: camera) is evaluated to make a decision regarding a target position in the multi-dimensional input space of the sensor, which target position can e.g. be a recognized visual target. In a further step the sensor coordinates (angles etc.) are mapped into the motor coordinates (voltages, currents etc.) using a predefined look-up table or analytical function in order to generate the actuator (motor) command necessary for the before decided new orientation of the camera.

Typical examples for sensor means providing explicit orientation information are e.g. an image sensor array, a radar image sensor array or a chemical receptor sensor array. A typical sensor means providing implicit orientation information is the use of stereo microphones to localise a sound source. Sensor means providing implicit orientation information require an extraction of the orientation information before said orientation information can be used.

Robots comprising sensors which supply orientation information are known as orienting robots. It is a disadvantage of such orienting robots that they frequently require calibration to work properly. Such a calibration must be done after every change in system geometry (e.g. when the physical relation between a sensor and an actuator of the robot is changed), after every modification (e.g. lens replacement, a motor modification) and if the robot is used in a changing or uncontrolled environment.

In certain environments a manual calibration by a user is not possible or desired (e.g. if the robot is a probe sent to a foreign planet). Furthermore, in case of frequent changes in system geometry, of frequent modification of the sensors or motors or an uncontrolled environment frequent calibration is very time consuming and laborious.

Therefore, self-calibrating orienting robots have been proposed.

Such self-calibrating orienting robots usually use calibration scenarios, mathematical analysis or parameter/hardware tuning with human supervision.

All of the above calibration techniques have disadvantages:

The use of calibration scenarios normally requires the return of actuators of the robot to reference points. Therefore, calibration in a new and/or uncontrolled environment frequency is not possible. Moreover, said calibration by using reference point frequently is not sufficient to solve the problem of non-linearity of motor responses.

Calibration by mathematical analysis has the drawback that several implicit assumptions are necessary which frequently result in strong simplifications. Often only a subset of variations is taken into account. Thus, the accuracy of said calibration method usually is insufficient. Furthermore, calibration by mathematical analysis often is not applicable for online calibration due to the high complexity.

Parameter/hardware tuning with human supervision has the drawback that it requires human expert intervention. Therefore, this calibration solution is not suitable for autonomous robots. Moreover, this calibration technique usually is very time consuming and highly depends on the experience of the expert.

Robotic systems comprising sensor means, in particular cameras, to provide orientation information, being controlled by adaptive learning algorithms, are disclosed in the documents : BUESSLER J-L ET AL: "Visually guided movements: learning with modular neural maps in robotics" NEURAL NETWORKS, ELSEVIER SCIENCE PUBLISHERS, BARKING, GB, vol. 11, no. 7-8, 11 October 1998 (1998-10-11), pages 1395-1415, ISSN: 0893-6080, as well as KUHN D ET AL: "Cooperation of neural networks applied to a robotic hand-eye coordination task" SYSTEMS, MAN AND CYBERNETICS, 1995. INTELLIGENT SYSTEMS FOR THE 21 ST CENTURY., IEEE INTERNATIONAL CONFERENCE ON VANCOUVER, BC, CANADA 22-25 OCT. 1995, NEW YORK, NY, USA, IEEE, US, vol. 4, 22 October 1995 (1995-10-22), pages 3694-3699, ISBN: 0-7803-2559-1

Therefore, it is an object of the present invention to provide a method of controlling an orienting system and a self-calibrating orienting system which allows an auto-calibration of the system without human intervention with high accuracy.

It is a further object of the present invention to provide a method of controlling orienting system and a self-calibrating orienting system which is adapted to deal with non-linearities in motor/sensor responses and which is adapted to be used in a changing and/or uncontrolled environment where maintenance is not possible or desired.

The above objects are achieved by means of the features of the independent claims. The dependent claims develop further the central idea of the present invention.

According to a first aspect of the present invention a method for controlling an orienting/positioning system is proposed,

the orienting system comprising at least one sensor means and actuator means for controlling an orienting and/or positioning action of manipulating means such as e.g. a robot device which can be detected by the sensor means and which can interact with the real-world in order to change the input space of the sensor means as planned by the system.

The method comprises the following steps:

- (S1) Evaluating pre-action output information of said sensor means in order to detect the position of the manipulating device in the input space of the sensor means;
- (S2) Deciding on a targeted post-action position of said manipulating device in the input space of said sensor means;
- (S3) Defining a command for the actuator means by mapping any deviation of the pre-action position and the targeted post-action position in the input space coordinates of the sensor means to actuator control coordinates using a predefined mapping function;
- (S4) Orienting/positioning the manipulating means by the actuator means according to the defined command in order to carry out an orienting/positioning action; and
- (S5) Detecting the real post-action position of the manipulating device in the input space of said sensor means;
- (S6) adapting the mapping function used in step S3 based on any difference of the real post-action position and the targeted post-action position in the input space of the sensor means in order to carry out an incremental adaptive learning of the mapping function,

wherein steps S1 to S6 are cyclically repeated at least once using the respectively adapted mapping function.

In step S6 a correction signal can be calculated based on any difference of the real post-action position and the targeted position of the manipulating device in the input space of the sensor means. The mapping function can be adapted taking into account the correction signal and the pre-action position of the manipulating device in the input space of the sensor means.

Before adapting the mapping function, the adaptation vector can be multiplied with a factor larger than or equal to 0 and smaller than or equal to 1 in order to control the adaptation rate for the mapping function.

The method can furthermore comprise the step of computing a confidence value based on the plausibility of the difference of the real post-action position and the targeted position of the manipulating device in the input space of the sensor means, e.g. by means of the correlation value of the selected patterns. The adaptation vector can then be modulated with the confidence value such that the adaptation rate depends on the confidence of e.g. the correlation between selected sensor patterns before and after the action.

The mapping function can be implemented by means of a look-up table. The look-up table associates sensor coordinates with the corresponding actuator coordinates.

In steps S1 to S6, for each cycle, not only the position of the pattern, but also a neighbourhood in a defined range surrounding the pattern position is used, wherein the range of the neighbourhood can be changed between two subsequent cycles.

The adaptation of the mapping function can be carried out in the sensor coordinates or in the actuator coordinates.

Another aspect of the present invention relates to a method for controlling an orienting/positioning system, the orienting system comprising at least one sensor means and actuator means for controlling an orienting and/or positioning action of a manipulating device such as e.g. a robotic device which can be detected by the sensor means and which can interact with the real-world in order to change the input space of the sensor means as planned by the system. The method comprises preferably the following steps:

- (S1) Mapping output information of said sensor means in the input space coordinates of the sensor means (1) to actuator control coordinates using a predefined mapping function;
- (S2) Deciding on a targeted post-action position, the decision taking place in the actuator control coordinates;
- (S3) Defining a command for the actuator means (41, 42, 43) based on the result of the decision; and
- (S4) Orienting/positioning manipulating device by the actuator means according to the defined command in order to carry out an orienting/positioning action of the sensor means.

Outputs of several sensor means can be individually mapped into actuator coordinates and then combined, wherein the decision in step S2 can be carried out on the basis of the result of the combination.

Constraints of the actuator means can be taken into account when making the decision in step S2.

Another aspect of the present invention relates to a computer software product adapted for implementing such a method when running on a computing device.

A still other aspect of the present invention relates to an auto-calibrating orienting/positioning system. The system preferably comprises at least one sensor means, computing means and actuator means for controlling an orienting and/or positioning action of a manipulating device such as e.g. a robotic device which can be detected by the sensor means and which can interact with the real-world in order to change the input space of the sensor means as planned by the system, the computing means comprising:

- means for evaluating pre-action output information of said sensor means in order to detect the position of the manipulating device in the input space of the sensor means (1);
- means for deciding on a targeted post-action position of said manipulating device in the input space of said sensor means;
- means for commanding the actuator means, the command being generated by mapping any deviation of the pre-action position and the targeted post-action position in the input space of the sensor means to actuator control coordinates using a predefined mapping function;
- means for detecting the real post-action position of the manipulating device in the input space of said sensor means; and
- means for calibrating the mapping function based on any difference of the real post-action position and the targeted post-action position of the manipulating device in the input space of the sensor means in order to carry out an incremental adaptive learning of the mapping function.

In the following detailed description, the present invention is explained by reference to the accompanying drawings, in which like reference characters refer to like parts throughout the views wherein

Fig. 1      shows an orienting device according to the prior art;

Fig. 2      shows an orienting action calculating process according to the prior art;

Fig. 3a, 3b    show schematically alternative processes according to the present invention;

Fig. 4      illustrates an embodiment for calculating the correction signal for an adaptive learning of the mapping function;

Fig. 5      illustrates an option for accelerating the adaptation process;

Fig. 6      illustrates the introduction of confidence values in the learning process of figures 3a or 3b, and

Fig. 7      shows a block diagram of the inventive self-calibrating orienting/positioning system.

A process according to the present invention shall now be explained with reference to figure 3a. Comparable to the known process (see figure 2) the output signal of a sensor is evaluated in order to make a decision regarding a target position of the manipulating device in the input space of the sensor means 1, which target position is to be achieved by a pre-calculated "one-strike" action. This means that an action, i.e. a planned interaction with the real world is first set-up and then carried out in its entirety. Only after the action is completed, any differences between the originally planned action and the real-world result are evaluated and additional correction actions can be planned and carried out.

For mapping the sensor coordinates of the decided action into actuator coordinates, according to the present invention an adaptively learned mapping is used. In a first cycle of the orientation a roughly estimated or arbitrarily set mapping function is used. In at least one further cycle an improved "learned" mapping function will be used.

This approach has the advantage that in case the sensor/actuator characteristics change (wear, change of the set-up, replacement, temperature fluctuations,...), the correct sensor/actuator mapping will be automatically achieved via a few learning/adaptation cycles without human interference and without analytically defining the correlation between actuator and sensor coordinates.

In order to carry out the adaptive learning process, once a cycle is completed and an action is carried out, the success of the action; i.e. whether the manipulating device has actually been brought close to the target position, is evaluated and depending on any deviation a correction signal is generated and fed to the mapping unit in order to carry out an incremental learning step. This cycle can be repeated until the deviation between the planned action and the real-world result is smaller than a preset threshold value. Alternatively the cycles can be repeated continuously.

Note that the correction signal is generated after the action, which was meant to bring upon the desired result in one strike, has been completed.

To summarize, according to this example the action to be taken is decided in the sensor coordinates; the decision making result is then mapped to the actuator (motor) coordinates.

Figure 3b shows an alternative arrangement in which the sensor coordinates are first mapped to the actuator coordinates before carrying out the decision making process in the actuator coordinate system. This arrangement has the advantage that e.g. restrictions on the actuator coordinates (maximum ranges, speed, acceleration etc.) can be easier taken into account during the decision now taking place in the actuator coordinates.

Further on, according to the alternative arrangement according to figure 3b output signals of different, eventually heterogeneous sensors can be individually mapped into respective actuator coordinates which can then be easily combined in order to make the decision on the action to be taken on the basis on the combined actuator coordinates.

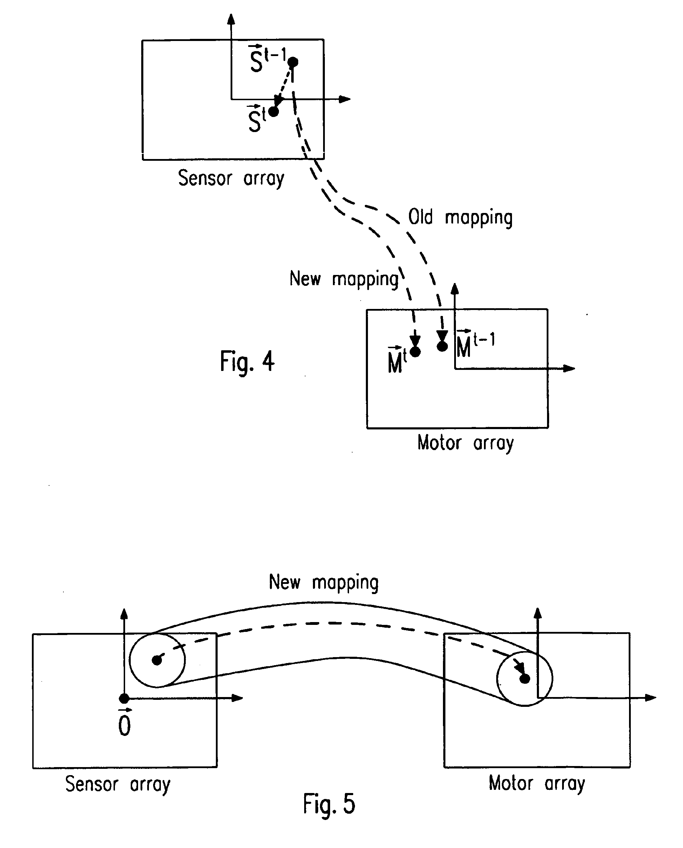

With reference to figure 4 an embodiment of the calculation of a correction signal and the adaptation of the mapping function shall be explained. As already explained, it is the aim of the mapping to translate the coordinates of the action decided in sensor coordinates in coordinates adapted for the control of the actuator means. Consequently figure 4 shows both a diagram of the sensor array and the motor array, respectively. In the present example it is envisaged to carry out an action by which the pre-action location $\vec{S}_x^{t-1}$ is transferred to the centre of the sensor array (sensor input space). Using a pres-set mapping function it is assumed that the corresponding actuator (motor) command be $\vec{M}_x^{t-1}$. Using this motor command, however, the pre-action location $\vec{S}_x^{t-1}$ is not exactly transferred to the target position in the sensor array, but to the post-action location $\vec{S}_x^t$.

According to the present embodiment now the incremental learning adaptation of the mapping function is carried out as an linear extrapolation, i.e. the adaptively corrected motor command for the coordinate (degree-of-freedom) x and to be used for the next cycle is:

$$\vec{M}_x^{t+1} = \vec{M}_x^{t-1} + \alpha_x \left( \hat{\vec{M}}_x^t - \vec{M}_x^{t-1} \right)$$

with

$$\hat{\vec{M}}_x^t = \vec{M}_x^{t-1} \cdot \frac{\vec{S}_x^{t-1}}{\left( \vec{S}_x^{t-1} - \vec{S}_x^t \right)},$$

and

being an optional parameter (being equal or larger than 0 and equal or smaller than 1) which controls the adaptation rate of the coordinate x.

Note that this extrapolation-type learning process can also be used for non-linear mappings.

Further on, the learning process as shown in figure 4 can be applied both to the decision making strategies of figure 3a and figure 3b.

Finally, this learning process can also be used in case of a single as well as multiple stimulus-emitting sources in the input space of the sensor(s).

In order to accelerate the learning process (potentially slowed down by the adaptation rate parameter $\alpha_x$) more than one location can be used in each cycle. As shown in figure 5, to speed-up the convergence of the adaptation, a defined neighbourhood of a location can be used. Thereby, by making the range of the neighbourhood variable in time, it is possible to achieve a mapping function that remains plastic for the case of sudden de-calibration of the system and at the same time locally stable to guarantee an accurate representation of any non-linearities.

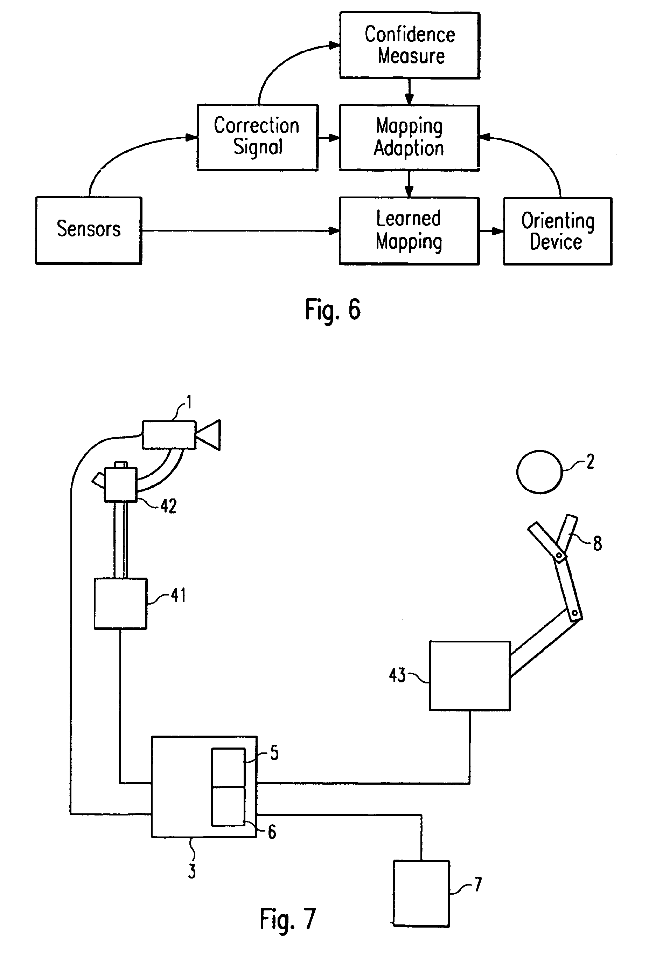

Figure 6 shows schematically that a confidence measure can be derived from the correction signal, e.g. applying plausibility checks. The adaptation rate can then be modulated with the confidence measure (having a value between 0 and 1). The introduction of the confidence measure minimizes the occurrence of erroneous adaptation steps which can take place in case of incorrect estimations of the correction signal. The correction signal is usually computed by a correlation method, in which case the correlation can be used (after normalization) as a confidence measure.

Fig. 7 schematically shows a self-calibrating orienting/positioning system according to the present invention.

The system comprises sensor means 1 for gathering information of the real world in order to localise a manipulating device in the at least one-dimensional input space of the sensor means 1. Alternatively, the sensor means 1 may be a radar image sensor array, a chemical receptor sensor array or a stereo microphone for localising a sound emitted by the object 2 or any other directional sensor.

The sensor means 1 is mounted on a frame comprising actuator means 41 and 42 which are e.g. adapted to tilt and pan the sensor means 1. In the present example said actuator means 41 and 42 can be e.g. electrical linear motors.

In consequence, the actuator means 41 and 42 are adapted to change the input space of the sensor means 1 by moving the sensor means 1 itself. Note that any planned process adapted to change the input space of the sensor means 1 by a manipulation in the real world is called an "action" within the framework of the present specification. Correspondingly "pre-action" and "post-action", respectively, designates states before and after such an action controlled by the actuator means has taken place.

Both the sensor means 1 and the actuator means 41 and 42 are connected to computing means 3.

In Fig. 7 said computing means 3 is a computer which is adapted to define a targeted post-action position information of the manipulating device in the input space of the sensor means 1 and to calculate a command for the actuator means 41 and 42 to move the sensor means 1. Alternatively or additionally the computing means can be adapted to calculate a command to move a manipulator 8 of a robot 43, the movement of the manipulator 8 also being an action suited to change the input space of the sensor means 1 under the control of the actuator means 41 and 42.

When calculating the command for the respective actuator means 41, 42 or the robot 43, the computing means uses pre-action position information provided by said sensor means 1, i.e. information on the position of the manipulating device in the input space of the sensor means 1 before the action has taken place, and a targeted post-action position information, i.e. an information representing a target position of the manipulating device 2 after the action has taken place. The target position can e.g. be the centre of the input space of the sensor means 1. Alternatively, particularly in case the actuator means control e.g. the manipulator arm of a robot etc., the target position can be set as the position (still in the input space of the sensor means 1) of an object to be manipulated by the robot.

The computing means 3 comprises a determining means 5 and a comparing means 6.

The determining means 5 is adapted to determine whether a post-action position information output by the sensor means 1, after an action of said actuator means 41, 42 and/or said robot 43 with said object 2 and/or said manipulator 8 by moving said sensor means 1 or by moving said manipulator 8 is completed, coincides with the targeted post-action position as defined before by the computing means 3.

If the determining means 5 determine that the post-action object-sensor position information does not match the targeted object-sensor position information, the computing means 3 are further adapted to correct the calculated command for the actuator means 41, 42 and the manipulator 43, respectively by using the comparison result output by the comparing means 6. The corrected command can then be used for a future action.

In order to implement the learning strategy of figure 3a, the computing means 3 is adapted to calculate a difference between the post-action object-sensor position information and the targeted post-action object-sensor position information and to automatically correct the calculate command for the actuator means 41, 42 or the manipulator 43 by using the following formula:

$$\vec{M}_x^{t+1} = \vec{M}_x^{t-1} + \alpha_x \left( \hat{\vec{M}}_x^t - \vec{M}_x^{t-1} \right)$$

with

$$\hat{\vec{M}}_x^t = \vec{M}_x^{t-1} \cdot \frac{\vec{S}_x^{t-1}}{\left( \vec{S}_x^{t-1} - \vec{S}_x^t \right)},$$

$\vec{M}_x^{t+1}$ being the corrected command for the actuator means (41, 42, 43) for the dimension $x$ at the time $t+1$,

$\vec{M}_x^{t-1}$ being the uncorrected command for the actuator means (41, 42, 43) for the dimension $x$ at the time $t-1$,

$\vec{S}_x^t$ being the post-action object-sensor position information for the dimension $x$ at the time $t$ after said actuator means (41, 42, 43) has been controlled according to the uncorrected command,

$\vec{S}_x^{t-1}$ being the targeted post-action object-sensor position information for the dimension $x$ at the time $t-1$, and $\alpha_x$ being a constant which controls the rate of adaptation for the dimension $x$.

The usage of said difference allows a correction of the calculated command for the actuator means 41, 42 and/or the manipulator 43 in a very accurate way since the amount of accuracy presently achieved by the command previously used to control the actuator means 41, 42 and/or the robot 43 explicitly is considered.

The corrected commands, i.e. the adaptively learned mapping function, can be stored by the computing means 3 in said storing means 7 in said command-map.

The commands stored in the command map are used by the computing means 3 to calculate any new commands for the actuator means 41, 42 and the manipulator 43, respectively.

By automatically comparing a post-action output of the sensor means with a pre-action output of the sensor means and using said comparison result to correct the calculated command for the actuator means the inventive method allows an auto-calibration of the orienting system and an adaptation to changing and uncontrolled environments.

Therefore, the present invention provides a method of controlling an orienting system and a self-calibrating orienting system, which allows automatic calibration of the system without human intervention with high accuracy. Furthermore, the inventive method of controlling orienting system and the inventive self-calibrating orienting system is adapted to deal with non-linearities in motor/sensor responses and is suitable to be used in a changing and/or uncontrolled environment where maintenance is not possible or desired. Thus, a long-time operation of the inventive system and method without human interference is possible.

The inventive system is simpler, more flexible and requires less maintenance than self-orienting / self-calibrating systems of the prior art. A change in the geometry of the inventive system is possible without necessitating a new calibration of the actuator means and the sensor means.

## Claims

1. A method for controlling an orienting/positioning system, the orienting system comprising at least one sensor means (1) and actuator means (41, 42, 43), for controlling an orienting and/or positioning action of a manipulating device (8) and/or said sensor means (1), said action resulting in changing the input space of said sensor means (1), the method comprising the following steps:

   - (S1) Evaluating pre-action output information of said sensor means (1) in order to detect the position of the manipulating device in the input space of the sensor means (1);
   - (S2) Deciding on a targeted post-action position of said manipulating device (2) in the input space of said sensor means (1);
   - (S3) Defining a command for the actuator means (41, 42, 43) by mapping any deviation of the pre-action position and the targeted post-action position in the input space coordinates of the sensor means (1) to actuator control coordinates using a predefined mapping function;
   - (S4) Orienting/positioning an manipulation device by the actuator means (41, 42, 43) according to the defined command in order to carry out an orienting/positioning action; and
   - (S5) Detecting the real post-action position of the manipulating device (2) in the input space of said sensor means (1);
   - (S6) adapting the mapping function used in step S3 based on any difference of the real post-action position and the targeted post-action position of the manipulating device in the input space of the sensor means (1) in order to carry out an incremental adaptive learning of the mapping function,

   wherein steps S1 to S6 are cyclically repeated at least once using the respectively adapted mapping function, **characterised in that** the method further comprises the step of

   - Computing a confidence value based on the plausibility of the difference of the real post-action position and the targeted position of the manipulating device; and
   - modulating the adaptation vector with the confidence value such that the adaptation rate depends on the confidence value.

2. A method according to claim 1, **characterised in that** in step S6

   - a correction signal is calculated based on any difference of the real post-action position and the targeted position of the manipulating device in the input space of the sensor means (1), and
   - the mapping function is adapted taking into account the correction signal, the executed actuator command and the pre-action position of the manipulating device in the input space of the sensor means (1).

3. A method of controlling an orienting system according to claim 2, **characterised in that** before the adaptation of the mapping function, the adaptation vector is multiplied with a factor larger than or equal to 0 and smaller than or equal to 1 in order to control the adaptation rate for the mapping function.

4. A method according to any of the preceding claims, **characterised in that** the mapping function is implemented by means of a look-up table.

5. A method according to any of the preceding claims, **characterised in that** in steps S1 to S6, for each cycle, not only the location, but also a neighbourhood in a defined range surrounding the location is used.

6. A method according to claim 5, **characterised in that** the range of the neighbourhood can be changed between two subsequent cycles.

7. A method according to any of the preceding claims, **characterised in that** the adaptation of the mapping function is carried out in the sensor coordinates.

8. A method according to any of the claims 1 to 7, **characterised in that** the adaptation of the mapping function is carried out in the actuator coordinates.

9. A method according to any of the preceding claims, comprising the step of:

   - (S2) Deciding on a targeted post-action position, the decision taking place in the actuator control coordinates;

10. A method according to claim 9, **characterised in that** outputs of several sensor means are individually mapped into actuator coordinates and then combined, wherein the decision in step S2 is carried out on the basis of the result of the combination.

**11.** A method according to claim 9 or 10, **characterised in that** constraints of the actuator means are taken into account when making the decision in step S2.

**12.** A computer software product adapted for implementing a method according to any of the preceding claims when running on a computing device.

**13.** An auto-calibrating orienting/positioning system, comprising at least one sensor means (1), computing means and actuator means (41, 42, 43) for controlling an orienting and/or positioning action of manipulating device (8) and/or said sensor means (1), said action resulting in changing the input space of said sensor means (1), the computing means comprising:

- means for evaluating pre-action output information of said sensor means (1) in order to detect the position of the manipulating device in the input space of the sensor means (1);
- means for deciding on a targeted post-action position of said manipulating device (2) in the input space of said sensor means (1);
- means for commanding the actuator means (41, 42, 43), the command being generated by mapping any deviation of the pre-action position and the targeted post-action position in the input space of the sensor means (1) to actuator control coordinates using a predefined mapping function;
- means for detecting the real post-action position of the manipulating device in the input space of said sensor means (1);
- means for calibrating the mapping function based on any difference of the real post-action position and the targeted post-action position of the manipulating device in the input space of the sensor means (1) in order to carry out an incremental adaptive learning of the mapping function, **characterised in that** it further comprises
- means for computing a confidence value based on the plausibility of the difference of the real post-action position and the targeted position of the manipulating device , and
- means for modulating the adaptation vector with the confidence value such that the adaptation rate depends on the confidence value.

**14.** A system according to claim 13, **characterised by** means for calculating a correction signal based on any difference of the real post-action position and the targeted position of the manipulating device in the input space of the sensor means (1), wherein the mapping function is calibrated taking into account the correction signal and the pre-action position of the manipulating device in the input space of the sensor means (1).

**15.** A system according to claim 14, **characterised in that** before the calibration of the mapping function, the correction signal is multiplied with a factor larger than or equal 0 and smaller than or equal 1 in order to control the adaptation rate for the mapping function.

**16.** A system according to any of claims 14 or 15, **characterised in that** the mapping function is implemented by means of a look-up table.

**17.** A system according to any of claims 14 to 16, **characterised in that** the sensor means comprise at least one of a camera or a microphone.

**18.** A system according to any of claims 14 to 17, **characterised in that** the manipulating means is a robotic device.

**Patentansprüche**

**1.** Verfahren zum Steuern eines Orientierungs-/Positionierungssystems, wobei das Orientierungssystem zumindest eine Sensoreinrichtung (1) und eine Stellgliedeinrichtung (41, 42, 43) aufweist, um eine Orientierungs- und/oder Positionierungsaktion einer Handhabungseinrichtung (8) und/oder der Sensoreinrichtung (1) zu steuern, wobei die Aktion das Ändern des Eingangsraums der Sensoreinrichtung (1) zur Folge hat, wobei das Verfahren die folgenden Schritte aufweist:

- (S1) Auswerten einer Voraktions-Ausgangsinformation der Sensoreinrichtung (1), um die Position der Handhabungseinrichtung im Eingangsraum der Sensoreinrichtung (1) zu erfassen;
- (S2) Entscheiden über eine Ziel-Nachaktionsposition der Handhabungseinrichtung (2) im Eingangsraum der Sensoreinrichtung (1);
- (S3) Definieren eines Befehls für die Stellgliedeinrichtung (41, 42, 43) durch Abbilden einer Abweichung der Voraktionsposition und der Ziel-Nachaktionsposition in den Eingangsraum-Koordinaten der Sensoreinrichtung (1), um Koordinaten unter Verwendung einer vorgegebenen Abbildungsfunktion stellglied-zusteuern;
- (S4) Orientieren/Positionieren einer Handhabungseinrichtung durch die Stellgliedeinrichtung (41, 42, 43) gemäß dem definierten Befehl, um eine Orientierungs-/Positionierungs-Aktion auszuführen; und

- (S5) Erfassen der realen Nachaktionsposition der Handhabungseinrichtung (2) im Eingangsraum der Sensoreinrichtung (1);
- (S6) Adaptieren der Abbildungsfunktion, welche im Schritt S3 verwendet wird, auf Basis einer Differenz der realen Nachaktionsposition und der Ziel-Nachaktionsposition der Handhabungseinrichtung im Eingangsraum der Sensoreinrichtung (1), um ein inkrementales adaptives Lernen der Abbildungsfunktion auszuführen, wobei die Schritte S1 bis S6 zumindest einmal unter Verwendung der jeweiligen adaptierten Abbildungsfunktion zyklisch wiederholt werden, **dadurch gekennzeichnet, dass** das Verfahren außerdem folgende Schritte aufweist:

- Berechnen eines Vertrauenswerts auf Basis der Plausibilität der Differenz der realen Nachaktionsposition und der Ziel-Position der Handhabungseinrichtung; und
- Modulieren des Adaptionsvektors mit dem Vertrauenswert so, dass die Adaptionsrate vom Vertrauenswert abhängt.

2. Verfahren nach Anspruch 1,
**dadurch gekennzeichnet, dass**
im Schritt S6

- ein Korrektursignal auf Basis einer Differenz der realen Nachaktionsposition und der Ziel-Position der Handhabungseinrichtung im Eingangsraum der Sensoreinrichtung (1) berechnet wird, und
- die Abbildungsfunktion angepasst wird, wobei das Korrektursignal, der ausgeführte Stellgliedbefehl und die Voraktionsposition der Handhabungseinrichtung im Eingangsraum der Sensoreinrichtung (1) in Betracht gezogen werden.

3. Verfahren zum Steuern eines Orientierungssystems nach Anspruch 2,
**dadurch gekennzeichnet, dass**
vor der Adaption der Abbildungsfunktion der Adaptionsvektor mit einem Faktor multipliziert ist, der größer oder gleich 0 und kleiner oder gleich als 1 ist, um die Adaptionsrate für Abbildungsfunktion zu steuern.

4. Verfahren nach einem der vorhergehenden Ansprüche,
**dadurch gekennzeichnet, dass**
die Abbildungsfunktion mittels einer Nachschlagetabelle verwirklicht wird.

5. Verfahren nach einem der vorhergehenden Ansprüche,
**dadurch gekennzeichnet, dass**

in den Schritten S1 bis S6 für jeden Zyklus nicht nur die Lage, sondern auch eine Nachbarschaft in einem definierten Bereich, der die Lage umgibt, verwendet wird.

6. Verfahren nach Anspruch 5,
**dadurch gekennzeichnet, dass**
der Bereich der Nachbarschaft zwischen zwei aufeinanderfolgenden Zyklen geändert werden kann.

7. Verfahren nach einem der vorhergehenden Ansprüche,
**dadurch gekennzeichnet, dass**
die Adaption der Abbildungsfunktion in den Sensorkoordinaten ausgeführt wird.

8. Verfahren nach einem der Ansprüche 1 bis 7,
**dadurch gekennzeichnet, dass**
die Adaption der Abbildungsfunktion in Stellgliedkoordinaten ausgeführt wird.

9. Verfahren nach einem der vorhergehenden Ansprüche, welches folgenden Schritt aufweist:

- (S2) Entscheiden über die Ziel-Nachaktionsposition, wobei die Entscheidung in den Stellglied-Steuerkoordinaten stattfindet.

10. Verfahren nach Anspruch 9,
**dadurch gekennzeichnet, dass**
Ausgangssignale mehrerer Sensoreinrichtungen individuell in Stellgliedkoordinaten abgebildet werden und dann kombiniert werden, wobei die Entscheidung im Schritt S2 in Bezug auf die Basis des Ergebnisses der Kombination ausgeführt wird.

11. Verfahren nach Anspruch 9 oder 10,
**dadurch gekennzeichnet, dass**
Beschränkungen des Stellglieds in Betracht gezogen werden, wenn die Entscheidung im Schritt S2 getroffen wird.

12. Computer-Software-Produkt, welches angepasst ist, ein Verfahren nach einem der vorhergehenden Ansprüche zu verwirklichen, wenn dies auf einer Computereinrichtung abläuft.

13. Automatisches Kalibrierungs-Orientierungs-/Positionierungssystem, welches zumindest eine Sensoreinrichtung (1), eine Berechnungseinrichtung und eine Stellgliedeinrichtung (41, 42, 43) aufweist, um eine Orientierungs- und/oder Positionierungsaktion der Handhabungseinrichtung (8) und/oder der Sensoreinrichtung (1) zu steuern, wobei die Aktion das Ändern des Eingangsraums der Sensoreinrichtung (1) zur Folge hat,
wobei die Berechnungseinrichtung aufweist:

- eine Einrichtung zum Auswerten von Voraktions-Ausgangsinformation der Sensoreinrichtung (1), um die Position der Handhabungseinrichtung im Eingangsraum der Sensoreinrichtung (1) zu erfassen;
- eine Einrichtung zum Entscheiden über eine Ziel-Nachaktionsposition der Handhabungseinrichtung (2) im Eingangsraum der Sensoreinrichtung (1);
- eine Einrichtung zum Befehligen der Stellgliedeinrichtung (41, 42, 43),

wobei der Befehl durch Abbilden einer Abweichung des Voraktionsposition und der Ziel-Nachaktionsposition im Eingangsraum der Sensoreinrichtung (1) erzeugt wird, um Koordinaten unter Verwendung einer vorgegebenen Abbildungsfunktion stellgliedzusteuern;

- eine Einrichtung zum Erfassen der realen Nachaktionsposition der Handhabungseinrichtung im Eingangsraum der Sensoreinrichtung (1);
- eine Einrichtung zum Kalibrieren der Abbildungsfunktion auf Basis einer Differenz der realen Nachaktionsposition und der Ziel-Nachaktionsposition der Handhabungseinrichtung im Eingangsraum der Sensoreinrichtung (1), um ein inkrementales adaptives Lernen der Abbildungsfunktion auszuführen, **dadurch gekennzeichnet, dass** diese außerdem aufweist:
- eine Einrichtung zum Berechnen eines Vertrauenswerts auf Basis der Plausibilität der Differenz der realen Nachaktionsposition und Ziel-Nachaktionsposition der Handhabungseinrichtung, und
- eine Einrichtung zum Modulieren des Adaptionsvektors mit dem Vertrauenswert, derart, dass die Adaptionsrate vom Vertrauenswert abhängt.

14. System nach Anspruch 13,
**gekennzeichnet durch**
eine Einrichtung zum Berechnen eines Korrektursignals auf Basis einer Differenz der realen Nachaktionsposition und der Ziel-Nachaktionsposition der Handhabungseinrichtung im Eingangsraum der Sensoreinrichtung (1),
wobei die Abbildungsfunktion kalibriert wird, wobei das Korrektursignal und die Voraktionsposition der Handhabungseinrichtung im Eingangsraum der Sensoreinrichtung (1) in Betracht gezogen werden.

15. System nach Anspruch 14,
**dadurch gekennzeichnet, dass**
vor der Kalibrierung der Abbildungsfunktion das Korrektursignal mit einem Faktor multipliziert wird, der größer als oder gleich 0 und kleiner als oder gleich 1 ist, um die Adaptionsrate für die Abbildungsfunktion zu steuern.

16. System nach einem der Ansprüche 14 oder 15,
**dadurch gekennzeichnet, dass**
die Abbildungsfunktion mittels einer Nachschlagetabelle verwirklicht wird.

17. System nach einem der Ansprüche 14 bis 16,
**dadurch gekennzeichnet, dass**
die Sensoreinrichtung zumindest eines von einer Kamera oder einem Mikrophon aufweist.

18. System nach einem der Ansprüche 14 bis 17,
**dadurch gekennzeichnet, dass**
die Handhabungseinrichtung eine Robotereinrichtung ist.

**Revendications**

1. Procédé de commande d'un système d'orientation/positionnement, le système d'orientation comprenant au moins un moyen capteur (1) et des moyens actionneurs (41, 42, 43), pour commander une action d'orientation et/ou de positionnement d'un dispositif de manipulation (8) et/ou dudit moyen capteur (1), ladite action résultant en un changement de l'espace d'entrée dudit moyen capteur (1),
le procédé comprenant les étapes suivantes :

- (S1) évaluation d'informations de sortie préaction dudit moyen capteur (1) afin de détecter la position du dispositif de manipulation dans l'espace d'entrée du moyen capteur (1) ;
- (S2) décision d'une position post-action ciblée dudit dispositif de manipulation (2) dans l'espace d'entrée dudit moyen capteur (1) ;
- (S3) définition d'une commande pour les moyens actionneurs (41, 42, 43) par la projection de tout écart entre la position pré-action et la position post-action ciblée, en coordonnées de l'espace d'entrée du moyen capteur (1), sur les coordonnées de commande des actionneurs, à l'aide d'une fonction de projection prédéfinie ;
- (S4) orientation/positionnement d'un dispositif de manipulation par les moyens actionneurs (41, 42, 43) selon la commande définie, afin d'exécuter une action d'orientation/positionnement ; et
- (S5) détection de la position post-action réelle du dispositif de manipulation (2) dans l'espace d'entrée dudit moyen capteur (1) ;
- (S6) adaptation de la fonction de projection utilisée à l'étape S3 en fonction de toute différence entre la position post-action réelle et la position post-action ciblée du dispositif de manipulation dans l'espace d'entrée du moyen capteur (1) afin d'exécuter un apprentissage adaptatif incrémentiel de la fonction de projection, dans lequel les étapes S1 à S6 sont répétées de manière cyclique au moins une fois à l'aide de la fonction de projection adaptée correspondante,

**caractérisé en ce que**
le procédé comprend en outre les étapes de :

- calcul d'une valeur de confiance en fonction de la plausibilité de la différence entre la position post-action réelle et la position ciblée du dispositif de manipulation ; et
- modulation du vecteur d'adaptation avec la valeur de confiance, de sorte la vitesse d'adaptation dépend de la valeur de confiance.

2. Procédé selon la revendication 1,
**caractérisé en ce que**
dans l'étape S6

- un signal de correction est calculé en fonction de toute différence entre la position post-action réelle et la position ciblée du dispositif de manipulation dans l'espace d'entrée du moyen capteur (1), et
- la fonction de projection est adaptée en tenant compte du signal de correction, de la commande des actionneurs exécutée et de la position préaction du dispositif de manipulation dans l'espace d'entrée du moyen capteur (1).

3. Procédé de commande d'un système d'orientation selon la revendication 2,
**caractérisé en ce que**
avant l'adaptation de la fonction de projection, le vecteur d'adaptation est multiplié par un facteur supérieur ou égal à 0 et inférieur ou égal à 1, afin de commander la vitesse d'adaptation pour la fonction de projection.

4. Procédé selon l'une quelconque des revendications précédentes,
**caractérisé en ce que**
la fonction de projection est mise en oeuvre au moyen d'une table de correspondance.

5. Procédé selon l'une quelconque des revendications précédentes,
**caractérisé en ce que**
dans les étapes S1 à S6, pour chaque cycle, non seulement l'emplacement, mais également le voisinage sur une étendue définie autour de l'emplacement, sont utilisés.

6. Procédé selon la revendication 5,
**caractérisé en ce que**

l'étendue du voisinage peut être modifiée entre deux cycles successifs.

7. Procédé selon l'une quelconque des revendications précédentes,
**caractérisé en ce que**
l'adaptation de la fonction de projection est exécutée dans les coordonnées du capteur.

8. Procédé selon l'une quelconque des revendications 1 à 7,
**caractérisé en ce que**
l'adaptation de la fonction de projection est exécutée dans les coordonnées des actionneurs.

9. Procédé selon l'une quelconque des revendications précédentes, comprenant l'étape de :

- (S2) décision d'une position post-action ciblée, la décision se faisant dans les coordonnées de commande des actionneurs.

10. Procédé selon la revendication 9,
**caractérisé en ce que**
les sorties de plusieurs moyens capteurs sont projetées individuellement en coordonnées des actionneurs, puis combinées, dans lequel la décision prise à l'étape S2 est exécutée en fonction du résultat de la combinaison.

11. Procédé selon la revendication 9 ou 10,
**caractérisé en ce que**
les contraintes des moyens actionneurs sont prises en compte lors de la prise de décision à l'étape S2.

12. Produit logiciel informatique adapté pour la mise en oeuvre d'un procédé selon l'une quelconque des revendications précédentes, lors de son exécution sur un dispositif informatique.

13. Système d'orientation/positionnement auto-calibrant, comprenant au moins un moyen capteur (1), des moyens de calcul et des moyens actionneurs (41, 42, 43) pour commander une action d'orientation et/ou de positionnement d'un dispositif de manipulation (8) et/ou dudit moyen capteur (1), ladite action résultant en un changement de l'espace d'entrée dudit moyen capteur (1),
les moyens de calcul comprenant :

- des moyens pour évaluer des informations de sortie pré-action dudit moyen capteur (1) afin de détecter la position du dispositif de manipulation dans l'espace d'entrée du moyen capteur (1) ;
- des moyens pour décider une position postaction ciblée dudit dispositif de manipulation (2) dans l'espace d'entrée du moyen capteur (1) ;
- des moyens pour commander les moyens actionneurs (41, 42, 43), la commande étant générée par projection de tout écart entre la position pré-action et la position post-action ciblée dans l'espace d'entrée du moyen capteur (1) sur les coordonnées de commande des actionneurs, à l'aide d'une fonction de projection prédéfinie ;

- des moyens pour détecter la position post-action réelle du dispositif de manipulation dans l'espace d'entrée dudit moyen capteur (1) ;

- des moyens pour calibrer la fonction de projection en fonction de toute différence entre la position post-action réelle et la position post-action ciblée du dispositif de manipulation dans l'espace d'entrée du moyen capteur (1) afin d'exécuter un apprentissage adaptatif incrémentiel de la fonction de projection,

**caractérisé en ce qu'**il comprend en outre :

- des moyens pour calculer une valeur de confiance en fonction de la plausibilité de la différence entre la position post-action réelle et la position ciblée du dispositif de manipulation, et
- des moyens pour moduler le vecteur d'adaptation avec la valeur de confiance, de sorte la vitesse d'adaptation dépend de la valeur de confiance.

14. Système selon la revendication 13,
   **caractérisé par**
   des moyens pour calculer un signal de correction en fonction de toute différence entre la position post-action réelle et la position ciblée du dispositif de manipulation dans l'espace d'entrée du moyen capteur (1),
   dans lequel la fonction de projection est calibrée en tenant compte du signal de correction et de la position pré-action du dispositif de manipulation dans l'espace d'entrée du moyen capteur (1).

15. Système selon la revendication 14,
   **caractérisé en ce que**
   avant le calibrage de la fonction de projection, le signal de correction est multiplié par un facteur supérieur ou égal à 0 et inférieur ou égal à 1, afin de commander la vitesse d'adaptation pour la fonction de projection.

16. Système selon l'une quelconque des revendications 14 ou 15,
   **caractérisé en ce que**
   la fonction de projection est mise en oeuvre au moyen d'une table de correspondance.

17. Système selon l'une quelconque des revendications 14 à 16,
   **caractérisé en ce que**

le moyen capteur comprend au moins un élément parmi une caméra ou un microphone.

18. Système selon l'une quelconque des revendications 14 à 17,
   **caractérisé en ce que**
   les moyens de manipulation sont un dispositif robotique.

Fig. 1

Fig. 2

Fig. 3a

Fig. 3b

Fig. 4

Fig. 5

Fig. 6

Fig. 7

**EP 1 586 421 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Visually guided movements: learning with modular neural maps in robotics. **BUESSLER J-L et al.** NEURAL NETWORKS. ELSEVIER SCIENCE PUBLISHERS, 11 October 1998, vol. 11, 1395-1415

- Cooperation of neural networks applied to a robotic hand-eye coordination task. **KUHN D et al.** SYSTEMS, MAN AND CYBERNETICS, 1995. INTELLIGENT SYSTEMS FOR THE 21 ST CENTURY. 22 October 1995, vol. 4, 3694-3699